# EUROPEAN PATENT APPLICATION

(11) **EP 4 266 513 A1**
(43) Date of publication of application: **25.10.2023**
(21) Application number: 22762885.6
(22) Date of filing: 03.02.2022
(51) Int. Cl.: H01S 3/02, H01S 3/042, H01S 3/06, H01S 3/091

(54) **LASER MEDIUM UNIT AND LASER DEVICE**

(30) Priority: 04.03.2021 JP 2021034560
(71) Applicant: Hamamatsu Photonics K.K., Hamamatsu-shi, Shizuoka 435-8558 (JP)
(72) Inventor: MURAMATSU, Yuki, Hamamatsu-shi, Shizuoka 435-8558 (JP); SEKINE, Takashi, Hamamatsu-shi, Shizuoka 435-8558 (JP); HATANO, Yuma, Hamamatsu-shi, Shizuoka 435-8558 (JP); TAMAOKI, Yoshinori, Hamamatsu-shi, Shizuoka 435-8558 (JP); KURATA, Masateru, Hamamatsu-shi, Shizuoka 435-8558 (JP)
(74) Representative: Grünecker Patent- und Rechtsanwälte PartG mbB
(86) International application number: PCT/JP2022/004208
(87) International publication number: WO 2022/185827

(57) **Abstract**

Disclosed is a laser medium unit that includes a laser medium and a holding body. The laser medium has a pair of end surfaces. The holding body surrounds the laser medium when viewed form a direction intersecting with the pair of end surfaces and holds the laser medium. The holding body includes a deformation allowing portion that extends from the inside to the outside of the holding body when viewed from the direction intersecting with the pair of end surfaces. The laser medium and the holding body are in contact with each other. A contact region of the holding body with the laser medium has a width in the direction intersecting with the pair of end surfaces and extends along a side surface of the laser medium when viewed from the direction intersecting with the pair of end surfaces.

## Description

### Technical Field

The present disclosure relates to a laser medium unit and a laser device.

### Background Art

A laser medium unit which includes a laser medium having a disk shape, a holding plate that surrounds the laser medium when viewed from the thickness direction of the laser medium, and a C-ring, a spring, or a plurality of contact fingers (hereinafter referred to as a "C-ring or the like") is disclosed in Patent Literature 1. The C-ring or the like is disposed between the laser medium and the holding plate. In the laser medium unit disclosed in Patent Literature 1, when the holding plate is cooled by a cooling gas, the C-ring or the like functions as a heat conducting portion that releases heat generated in the laser medium to the holding plate and functions as a stress relieving portion that relieves a stress generated in the laser medium due to shrinkage of the holding plate.

### Citation List

### Patent Literature

Patent Literature 1: International Publication WO2013/093503

### Summary of Invention

### Technical Problem

In the laser medium unit described in Patent Literature 1, the C-ring or the like functions as a stress relieving portion, and as a result, it is assumed that deterioration of the characteristics of the laser medium due to stress birefringence is curbed. However, in the laser medium unit described in Patent Literature 1, since the contact between the C-ring or the like and the laser medium is insufficient, the C-ring or the like does not sufficiently function as a heat conduction portion, and as a result, it is assumed that deterioration of the characteristics of the laser medium due to thermal birefringence is not sufficiently curbed and that temperature control of the laser medium becomes difficult.

Therefore, an object of the present disclosure is to provide a laser medium unit and a laser device capable of sufficiently curbing both deterioration of the characteristics of a laser medium due to stress birefringence and deterioration of the characteristics of a laser medium due to thermal birefringence and capable of facilitating temperature control of a laser medium.

### Solution to Problem

According to an aspect of the present disclosure, there is provided a laser medium unit including: a laser medium having a pair of end surfaces; and a holding body configured to surround the laser medium when viewed from a direction intersecting with the pair of end surfaces and to hold the laser medium, wherein the holding body includes a deformation allowing portion that extends from the inside to the outside of the holding body when viewed from the direction intersecting with the pair of end surfaces, wherein the laser medium and the holding body are in contact with each other, and wherein a contact region of the holding body with the laser medium has a width in the direction intersecting with the pair of end surfaces and extends along an outer edge of the laser medium when viewed from the direction intersecting with the pair of end surfaces.

In this laser medium unit, the holding body that holds the laser medium includes the deformation allowing portion that extends from the inside to the outside of the holding body. As a result, even if the laser medium unit is cooled and the holding body shrinks, it is possible to relieve a stress generated in the laser medium due to the shrinkage of the holding body, and it is possible to curb deterioration of the characteristics of the laser medium due to stress birefringence. In addition, a contact region of the holding body with the laser medium has a width in the direction intersecting with the pair of end surfaces of the laser medium and extends along the outer edge of the laser medium when viewed from that direction. As a result, it is possible to efficiently release heat generated in the laser medium to the holding body, it is possible to curb deterioration of the characteristics of the laser medium due to thermal birefringence, and it is possible to facilitate temperature control of the laser medium. As described above, according to this laser medium unit, it is possible to sufficiently curb both the deterioration of the characteristics of the laser medium due to the stress birefringence and the deterioration of the characteristics of the laser medium due to the thermal birefringence, and it is possible to facilitate the temperature control of the laser medium.

In the laser medium unit according to the aspect of the present disclosure, the laser medium may have a plate shape with each of the pair of end surfaces as a main surface. In a case where the laser medium has a plate shape, it may be difficult to secure the contact region of the holding body with the laser medium compared to a case where the laser medium has a rod shape, for example. Therefore, in a case where the laser medium has a plate shape, the configuration of the holding body described above is particularly effective.

In the laser medium unit according to the aspect of the present disclosure, the holding body may have a main body portion including the deformation allowing portion and a stress relieving portion provided between the laser medium and the main body portion. As a result, it is possible to more reliably relieve a stress generated in the laser medium due to the shrinkage of the holding body, and it is possible to more reliably curb deterioration of the characteristics of the laser medium due to stress birefringence.

In the laser medium unit according to the aspect of the present disclosure, the laser medium may have a light amplification region and a light absorption region that surrounds the light amplification region when viewed from the direction intersecting with the pair of end surfaces. As a result, some of the emitted light generated in the light amplification region is absorbed by the light absorption region, and thus the occurrence of the parasitic oscillation is curbed. Moreover, in the light absorption region, heat is generated by absorption of some of the emitted light, and thus the configuration of the holding body described above is particularly effective.

In the laser medium unit according to the aspect of the present disclosure, the deformation allowing portion may include a slit that extends from the inside to the outside of the holding body when viewed from the direction intersecting with the pair of end surfaces. As a result, it is possible to easily and reliably obtain a holding body capable of both relieving the stress generated in the laser medium due to the shrinkage of the holding body and efficiently releasing the heat generated in the laser medium to the holding body.

In the laser medium unit according to the aspect of the present disclosure, the slit may be each of a plurality of slits, and the plurality of slits may be disposed at equal angular intervals when viewed from the direction intersecting with the pair of end surfaces. As a result, it is possible to uniformly relieve the stress generated in the laser medium due to the shrinkage of the holding body, and it is possible to uniformly release the heat generated in the laser medium to the holding body.

The laser medium unit according to the aspect of the present disclosure may further include a first elastic member, wherein the slit may be each of a plurality of slits, and wherein the first elastic member may be disposed in each of the plurality of slits. As a result, even if the holding body is divided by the plurality of slits, it is possible to appropriately bring the holding body into contact with the laser medium.

The laser medium unit according to the aspect of the present disclosure may further include an attachment member, wherein the slit may be each of a plurality of slits, and wherein the attachment member may surround the holding body when viewed from the direction intersecting with the pair of end surfaces. As a result, even if the holding body is divided by the plurality of slits, it is possible to appropriately bring the holding body into contact with the laser medium.

The laser medium unit according to the aspect of the present disclosure may further include a second elastic member disposed between the holding body and the attachment member. As a result, even if the holding body is divided by the plurality of slits, it is possible to appropriately bring the holding body into contact with the laser medium.

In the laser medium unit according to the aspect of the present disclosure, a thermal expansion coefficient of the attachment member may be smaller than a thermal expansion coefficient of the holding body. As a result, when the laser medium unit is cooled, the shrinkage amount of the attachment member becomes smaller than the shrinkage amount of the holding body, but since the second elastic member is disposed between the holding body and the attachment member, it is possible to curb the influence of the shrinkage of the attachment member on the laser medium.

In the laser medium unit according to the aspect of the present disclosure, a thermal expansion coefficient of the attachment member may be larger than a thermal expansion coefficient of the holding body. As a result, when the laser medium unit is cooled, the shrinkage amount of the attachment member becomes larger than the shrinkage amount of the holding body, but since the second elastic member is disposed between the holding body and the attachment member, it is possible to curb the influence of the shrinkage of the attachment member on the laser medium.

According to another aspect of the present disclosure, there is provided a laser device including the laser medium unit described above.

According to the laser device of the aspect of the present disclosure, as described above, it is possible to sufficiently curb both the deterioration of the characteristics of the laser medium due to the stress birefringence and the deterioration of the characteristics of the laser medium due to the thermal birefringence, and it is possible to facilitate the temperature control of the laser medium.

The laser device according to the aspect of the present disclosure may further include a chamber configured to accommodate the laser medium unit and to allow a coolant to flow therethrough. As a result, it is possible to efficiently cool the laser medium unit.

In the laser device according to the aspect of the present disclosure, the laser medium unit may be each of a plurality of laser medium units, and each of the plurality of laser medium units may be disposed with a gap through which the coolant flows. As a result, it is possible to efficiently cool the plurality of laser medium units.

The laser device according to the aspect of the present disclosure may further include a laser light source configured to emit laser light to be amplified by the laser medium unit; and an excitation light source configured to emit excitation light that excites the laser medium. As a result, it is possible to amplify the laser light with excellent characteristics.

In the laser device according to the aspect of the present disclosure, the excitation light source may be each of a first excitation light source and a second excitation light source, the first excitation light source may be disposed on one side in the direction intersecting with the pair of end surfaces with respect to the laser medium unit, and the second excitation light source may be disposed on the other side in the direction intersecting with the pair of end surfaces with respect to the laser medium unit. As a result, it is possible to amplify the laser light with more excellent characteristics.

### Advantageous Effects of Invention

According to the present disclosure, it is possible to provide a laser medium unit and a laser device capable of sufficiently curbing both deterioration of the characteristics of a laser medium due to stress birefringence and deterioration of the characteristics of a laser medium due to thermal birefringence and capable of facilitating temperature control of a laser medium.

### Brief Description of Drawings

FIG. 1 is a configuration diagram of a laser device of a first embodiment.
FIG. 2 is a front view of a laser medium unit shown in FIG. 1.
FIG. 3 is an exploded perspective view of the laser medium unit shown in FIG. 2.
FIG. 4 is a front view of a laser medium unit of a second embodiment.
FIG. 5 is an exploded perspective view of the laser medium unit shown in FIG. 4.
FIG. 6 is a front view of a laser medium unit of a third embodiment.
FIG. 7 is a front view of a laser medium unit of a modification example.
FIG. 8 is a front view of a laser medium unit of a modification example.
FIG. 9 is a diagram showing a first elastic member of a modification example.

### Description of Embodiments

Hereinafter, embodiments of the present disclosure will be described in detail with reference to the drawings. The same or corresponding parts in the drawings are denoted with the same reference signs, and repetitive description will be omitted.

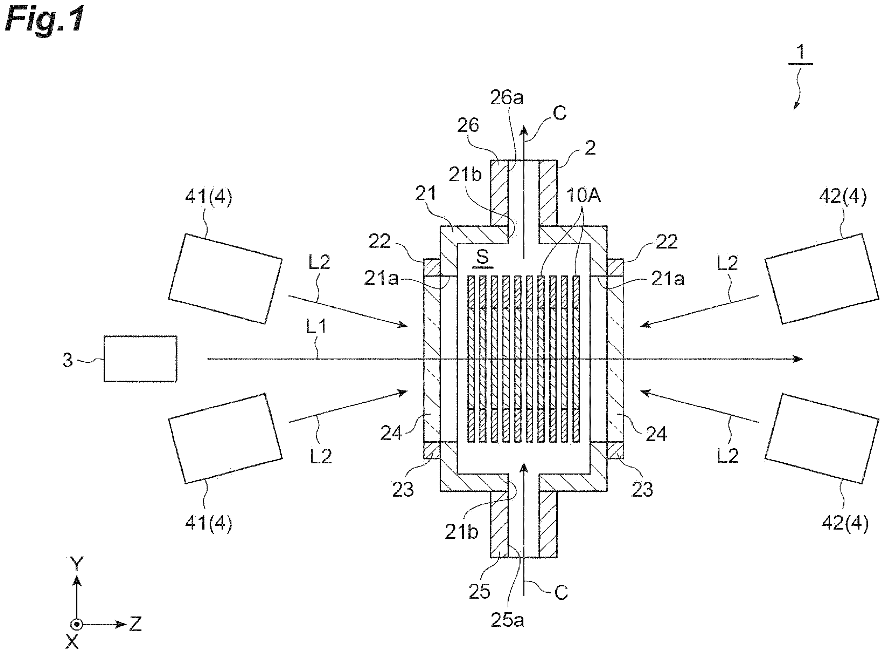

[First embodiment] As shown in FIG. 1, a laser device 1 of a first embodiment includes a plurality of laser medium units 10A, a chamber 2, a laser light source 3, and a plurality of excitation light sources 4. The laser medium units 10A are disposed with a gap therebetween in a Z-axis direction.

The chamber 2 has a main body portion 21, a pair of window portions 22, an introduction portion 25, and a leading-out portion 26. The main body portion 21 has an internal space S that accommodates the plurality of laser medium units 10A. A pair of openings 21a and a pair of openings 21b are formed in the main body portion 21. The pair of openings 21a are opposed to each other in the Z-axis direction. The pair of openings 21b are opposed to each other in a Y-axis direction.

Each window portion 22 is attached to the main body portion 21 to block each opening 21a. The window portion 22 includes a frame 23 and a window member 24 held by the frame 23. The window member 24 transmits laser light L1 and excitation light L2, which will be described later.

The introduction portion 25 has an introduction passage 25a. The introduction portion 25 is attached to the main body portion 21 such that the introduction passage 25a communicates with the internal space S through the opening 21b. The introduction portion 25 introduces a coolant C (for example, a cooling gas such as low-temperature helium gas) into the internal space S. The coolant C flows through the gap formed between adjacent laser medium units 10A in the internal space S. The leading-out portion 26 has a leading-out passage 26a. The leading-out portion 26 is attached to the main body portion 21 such that the leading-out passage 26a communicates with the internal space S through the opening 21b. The leading-out portion 26 leads the coolant C out of the internal space S.

The laser light source 3 is disposed on one side in the Z-axis direction with respect to the chamber 2 (the plurality of laser medium units 10A). The laser light source 3 emits the laser light L1 as seed light to the plurality of laser medium units 10A. The laser light L1 emitted from the laser light source 3 is incident on the plurality of laser medium units 10A through the window member 24 of the window portion 22 disposed on one side in the Z-axis direction with respect to the plurality of laser medium units 10A. The laser light L1 is amplified by each laser medium unit 10A.

The plurality of excitation light sources 4 include a pair of first excitation light sources 41 and a pair of second excitation light sources 42. The pair of first excitation light sources 41 are disposed on one side in the Z-axis direction with respect to the chamber 2 (the plurality of laser medium units 10A). Each first excitation light source 41 emits the excitation light L2 to the plurality of laser medium units 10A. The excitation light L2 emitted from each first excitation light source 41 is incident on the plurality of laser medium units 10A through the window member 24 of the window portion 22 disposed on one side in the Z-axis direction with respect to the plurality of laser medium units 10A. The pair of second excitation light sources 42 are disposed on the other side in the Z-axis direction with respect to the chamber 2 (the plurality of laser medium units 10A). Each second excitation light source 42 emits the excitation light L2 to the plurality of laser medium units 10A. The excitation light L2 emitted from each second excitation light source 42 is incident on the plurality of laser medium units 10A through the window member 24 of the window portion 22 disposed on the other side in the Z-axis direction with respect to the plurality of laser medium units 10A. The excitation light L2 excites a laser medium 11, which will be described later.

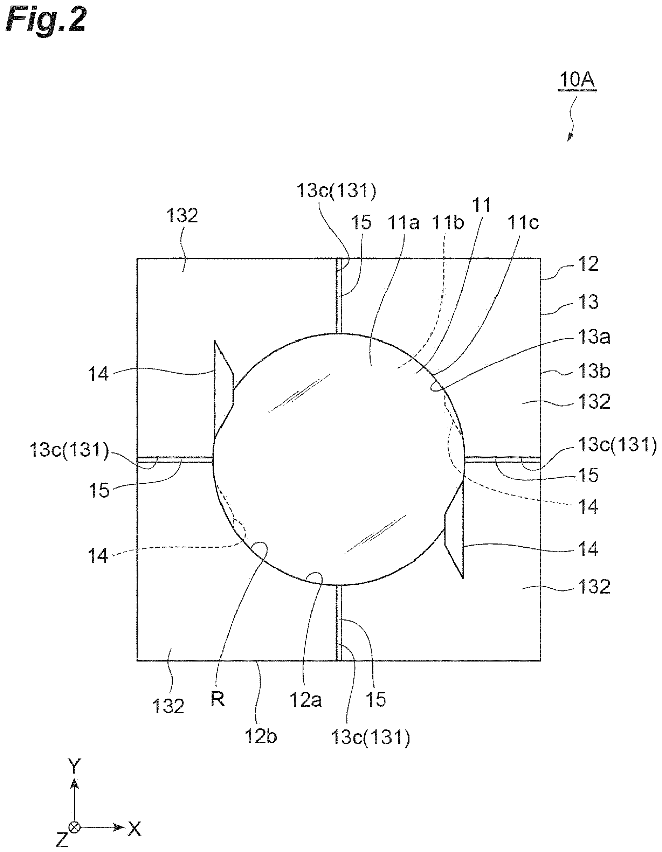

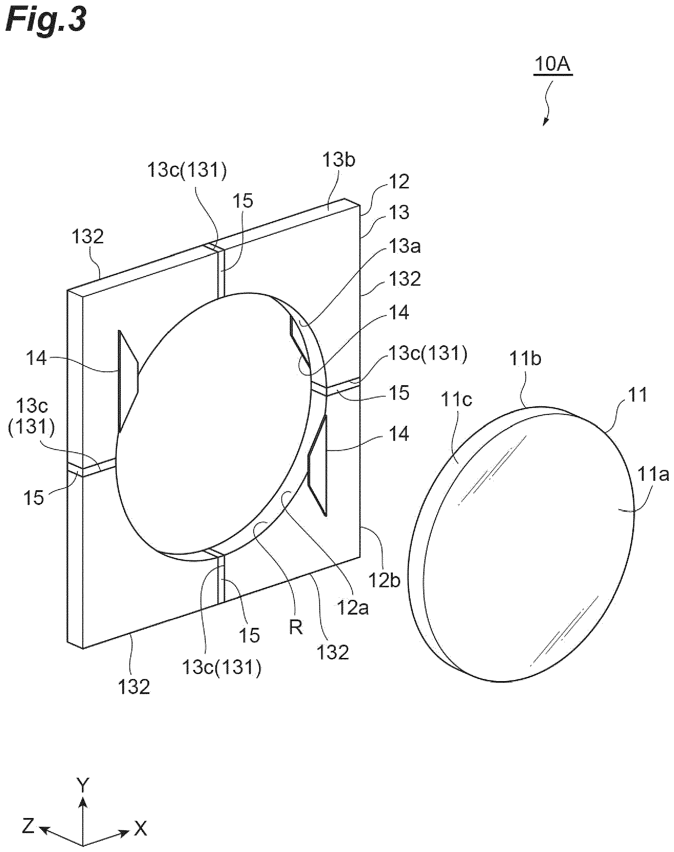

As shown in FIGS. 2 and 3, the laser medium unit 10A includes a laser medium 11, a holding body 12, and a first elastic member 15. The laser medium 11 has a pair of end surfaces 11a and 11b and a side surface 11c. The laser medium 11 has a plate shape with the pair of end surfaces 11a and 11b as main surfaces. The laser medium 11 has, for example, a disk shape. The side surface 11c of the laser medium 11 has a predetermined width in the Z-axis direction (a direction intersecting with the pair of end surfaces 11a and 11b of the laser medium 11). The thickness of the laser medium 11 (that is, the width of the side surface 11c in the Z-axis direction) is, for example, several millimeters to several tens of millimeters.

The laser medium 11 is a solid laser medium. The laser medium 11 is, for example, YAG doped with Yb as an active element. The laser medium 11 is excited by the excitation light L2 and outputs emission light. The emission light is, for example, induced emission light. The induced emission light contributes to light amplification of the laser light L1.

The holding body 12 surrounds the laser medium 11 when viewed from the Z-axis direction and holds the laser medium 11. The holding body 12 has a main body portion 13 and a plurality of locking portions (claw portions) 14. The main body portion 13 has, for example, a plate shape. The main body portion 13 has an inner side surface 13a and an outer side surface 13b. In the first embodiment, the inner side surface 13a of the main body portion 13 constitutes an inner side surface 12a of the holding body 12, and the outer side surface 13b of the main body portion 13 constitutes an outer side surface 12b of the holding body 12.

The inner side surface 13a extends along the side surface 11c of the laser medium 11 when viewed from the Z-axis direction. In the first embodiment, the inner side surface 13a has a circular shape when viewed from the Z-axis direction. The outer side surface 13b has, for example, a rectangular shape when viewed from the Z-axis direction. Each of the inner side surface 13a and the outer side surface 13b of the main body portion 13 has a predetermined width in the Z-axis direction (a thickness direction of the main body portion 13). The thickness of the main body portion 13 (that is, the width of each of the inner side surface 13a and the outer side surface 13b in the Z-axis direction) is, for example, several millimeters to several tens of millimeters. The thickness of the main body portion 13 is substantially the same as the thickness of the laser medium 11. The thermal expansion coefficient of the main body portion 13 is larger than the thermal expansion coefficient of the laser medium 11. The material of the main body portion 13 is, for example, copper or the like.

A pair of locking portions 14 are provided on one main surface of the main body portion 13. Similarly, a pair of locking portions 14 are provided on the other main surface of the main body portion 13. On each of one main surface and the other main surface of the main body portion 13, the pair of locking portions 14 are opposed to each other via a region inside the main body portion 13 when viewed from the Z-axis direction. On each of one main surface and the other main surface of the main body portion 13, each locking portion 14 protrudes further inside the main body portion 13 than the inner side surface 13a when viewed from the Z-axis direction.

The main body portion 13 surrounds the laser medium 11 when viewed from the Z-axis direction. That is, the laser medium 11 is disposed inside the main body portion 13. When viewed from the Z-axis direction, the diameter of the laser medium 11 is substantially the same as the diameter of the inner side surface 13a of the main body portion 13. Movement of the laser medium 11 in a direction perpendicular to the Z-axis direction is restricted by the main body portion 13. The laser medium 11 is sandwiched between the plurality of locking portions 14 in the Z-axis direction. Movement of the laser medium 11 in the Z-axis direction is restricted by the plurality of locking portions 14. In this way, the laser medium 11 is held inside the main body portion 13 by the main body portion 13 and the plurality of locking portions 14.

The laser medium 11 and the holding body 12 are in contact with each other. The laser medium 11 and the holding body 12 are in direct contact with each other without any other member (for example, a member with poor heat conductivity or the like) or the like. Specifically, the side surface 11c of the laser medium 11 and the inner side surface 13a of the main body portion 13 are in contact with each other. A contact region R of the holding body 12 with the laser medium 11 has a predetermined width in the Z-axis direction. The width of the contact region R in the Z-axis direction is preferably 50% or more of the thickness of the laser medium 11, more preferably 70% or more of the thickness of the laser medium 11, and still more preferably 90% or more of the thickness of the laser medium 11. In the first embodiment, the inner side surface 13a of the main body portion 13 corresponds to the contact region R. That is, the width of the contact region R in the Z-axis direction is approximately the same as the thickness of the laser medium 11.

The contact region R extends along the side surface 11c of the laser medium 11 when viewed from the Z-axis direction. That is, the contact region R extends along the outer edge of the laser medium 11 when viewed from the Z-axis direction. The contact region R is not separated from the outer edge of the laser medium 11 when viewed from the Z-axis direction. Each of the side surface 11c of the laser medium 11 and the contact region R is a continuous surface. For example, a concave portion such as a hole is not formed in the side surface 11c and the contact region R. There is no space between the side surface 11c and the contact region R. The laser medium 11 and the holding body 12 are in continuous contact with each other in the contact region R without a gap. The laser medium 11 and the holding body 12 are in close contact with each other in the contact region R.

The main body portion 13 includes a plurality of deformation allowing portions (a plurality of deformable portions) 131 that allow deformation of the main body portion 13. Each deformation allowing portion (each deformable portion) 131 extends from the inside to the outside of the holding body 12 when viewed from the Z-axis direction. Each deformation allowing portion 131 is a slit 13c. Each slit 13c extends from the inside to the outside of the holding body 12 when viewed from the Z-axis direction. Each slit 13c reaches the inner side surface 13a and the outer side surface 13b of the main body portion 13. As a result, the main body portion 13 is divided into a plurality of main body members 132. The plurality of slits 13c are disposed at equal angular intervals when viewed from the Z-axis direction. As an example, each slit 13c extends from a substantially central position of each side portion of the outer side surface 13b toward the inner side surface 13a of the main body portion 13 when viewed from the Z-axis direction.

When viewed from the Z-axis direction, the width of each slit 13c is sufficiently smaller than the length of the inner side surface 13a of the main body portion 13 (the side surface 11c of the laser medium 11). When viewed from the Z-axis direction, the width of each slit 13c is 5% or less of the length of the inner side surface 13a of the main body portion 13 (the side surface 11c of the laser medium 11). The width of the slit 13c when viewed from the Z-axis direction is smaller than the length of the slit 13c in an extending direction of the slit 13c. The width of the slit 13c when viewed from the Z-axis direction is smaller than the width of the contact region R in the Z-axis direction. The width of the slit 13c when viewed from the Z-axis direction is, for example, about several hundred micrometers to several millimeters.

The first elastic member 15 is disposed in each slit 13c. The first elastic member 15 is formed of, for example, a plurality of overlapping wire-like elastic bodies. The material of the first elastic member 15 is, for example, copper or the like. The first elastic member 15 is, for example, a copper mesh. The first elastic member 15 is fixed to the side surface of each main body member 132 forming the slit 13c by, for example, welding or brazing. The plurality of main body members 132 are integrally held by the first elastic member 15. The inner side surface 13a of the main body portion 13 is in contact with the side surface 11c of the laser medium 11 due to the elastic force of the first elastic member 15. Specifically, in a state where the inner side surface 13a of the main body portion 13 is in contact with the side surface 11c of the laser medium 11, the first elastic member 15 is pulled. The plurality of main body members 132 are brought closer to each other by the elastic force of the first elastic member 15.

As described above, in the laser medium unit 10A, the holding body 12 that holds the laser medium 11 includes the deformation allowing portion 131 that extends from the inside to the outside of the holding body 12. As a result, even if the laser medium unit 10A is cooled and the holding body 12 shrinks, it is possible to relieve a stress generated in the laser medium 11 due to the shrinkage of the holding body 12, and it is possible to curb deterioration of the characteristics of the laser medium 11 due to stress birefringence. In addition, the contact region R of the holding body 12 with the laser medium 11 has a predetermined width in the Z-axis direction and extends along the side surface 11c of the laser medium 11 when viewed from the Z-axis direction. That is, there is no space between the contact region R of the holding body 12 and the side surface 11c of the laser medium 11. The holding body 12 and the laser medium 11 are in close contact with each other in the contact region R. Furthermore, when viewed from the Z-axis direction, the width of each slit 13c is sufficiently smaller than the length of the inner side surface 13a of the main body portion 13. As a result, it is possible to efficiently release heat generated in the laser medium 11 to the holding body 12, it is possible to curb deterioration of the characteristics of the laser medium 11 due to thermal birefringence, and it is possible to facilitate temperature control of the laser medium 11. Since the laser medium 11 tends to accumulate heat in some cases, it is particularly important to cool the laser medium 11 efficiently. According to the above configuration, it is possible to efficiently release the heat of the laser medium 11, and it is possible to curb deterioration of the characteristics of the laser medium 11 or destabilization of the characteristics of the laser medium 11. As described above, according to the laser medium unit 10A, it is possible to sufficiently curb both the deterioration of the characteristics of the laser medium 11 due to the stress birefringence and the deterioration of the characteristics of the laser medium 11 due to the thermal birefringence, and it is possible to facilitate the temperature control of the laser medium 11.

In the laser medium unit 10A, the laser medium 11 has a plate shape with each of the pair of end surfaces 11a and 11b as a main surface. In a case where the laser medium 11 has a plate shape, it may be difficult to secure the contact region R of the holding body 12 with the laser medium 11 compared to a case where the laser medium has a rod shape, for example. Therefore, in a case where the laser medium 11 has a plate shape, the configuration of the holding body 12 described above is particularly effective. Further, it is possible to efficiently discharge the heat generated in the laser medium 11 from the pair of end surfaces 11a and 11b of the laser medium 11 as well in addition to the contact region R of the holding body 12 with the laser medium 11.

In the laser medium unit 10A, the deformation allowing portion 131 includes the slit 13c that extends from the inside to the outside of the holding body 12 when viewed from the Z-axis direction. As a result, it is possible to easily and reliably obtain a holding body capable of both relieving the stress generated in the laser medium 11 due to the shrinkage of the holding body 12 and efficiently releasing the heat generated in the laser medium 11 to the holding body.

In the laser medium unit 10A, the plurality of slits 13c are disposed at equal angular intervals when viewed from the Z-axis direction. As a result, it is possible to uniformly relieve the stress generated in the laser medium 11 due to the shrinkage of the holding body 12, and it is possible to uniformly release the heat generated in the laser medium 11 to the holding body 12.

The laser medium unit 10A has the first elastic member 15. The first elastic member 15 is disposed in each of the plurality of slits 13c. As a result, even if the holding body 12 is divided by the plurality of slits 13c, it is possible to appropriately bring the holding body 12 into contact with the laser medium 11.

According to the laser device 1, as described above, it is possible to sufficiently curb both the deterioration of the characteristics of the laser medium 11 due to the stress birefringence and the deterioration of the characteristics of the laser medium 11 due to the thermal birefringence, and it is possible to facilitate the temperature control of the laser medium 11.

The laser device 1 includes the chamber 2. The chamber 2 accommodates the laser medium unit 10A. The coolant C flows through the chamber 2. As a result, it is possible to efficiently cool the laser medium unit 10A.

In the laser device 1, each of the plurality of laser medium units 10A is disposed with a gap through which the coolant C flows. As a result, it is possible to efficiently cool the plurality of laser medium units 10A.

The laser device 1 includes the laser light source 3 and the excitation light source 4. The laser light source 3 emits the laser light L1 to be amplified by the laser medium unit 10A. The excitation light source 4 emits the excitation light L2 that excites the laser medium 11. As a result, it is possible to amplify the laser light L1 with excellent characteristics.

In the laser device 1, the first excitation light source 41 is disposed on one side in the Z-axis direction with respect to the laser medium unit 10A, and the second excitation light source 42 is disposed on the other side in the Z-axis direction with respect to the laser medium unit 10A. As a result, it is possible to amplify the laser light L1 with more excellent characteristics.

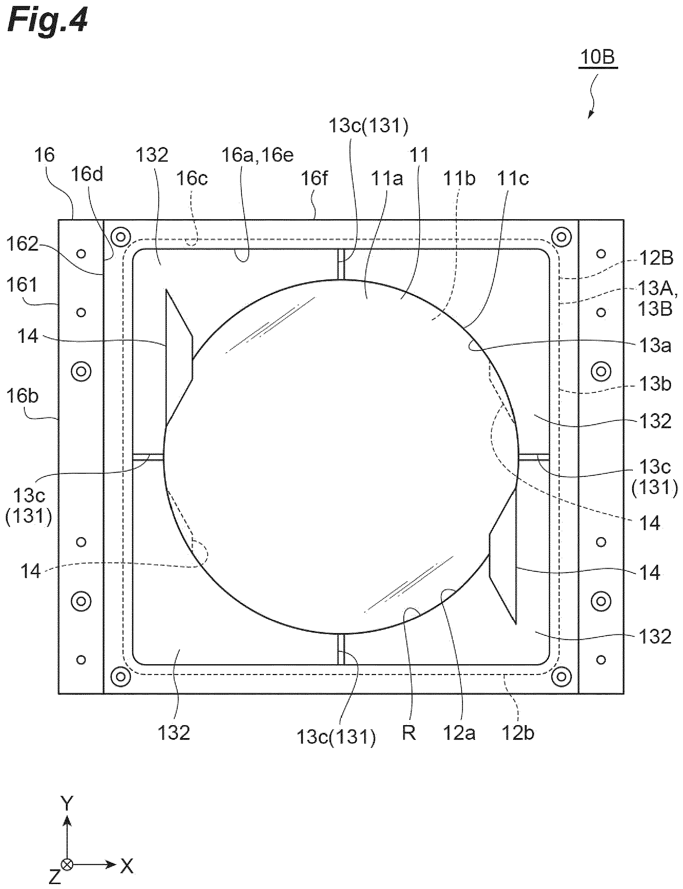

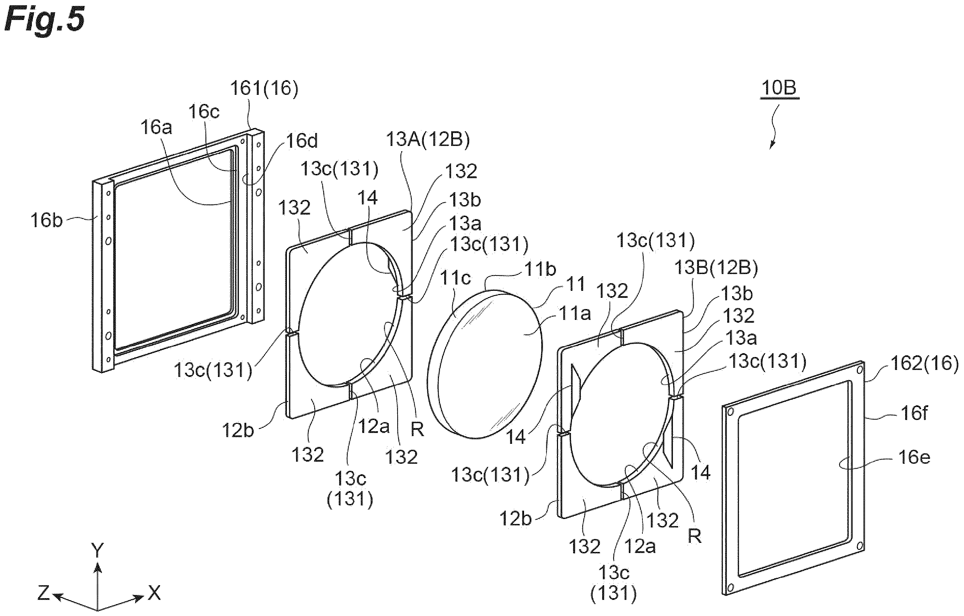

[Second embodiment] As shown in FIGS. 4 and 5, a laser medium unit 10B of a second embodiment is mainly different from the laser medium unit 10A of the first embodiment in that it includes a holding body 12B instead of the holding body 12, further includes an attachment member 16, and does not includes the first elastic member 15.

The laser medium unit 10B has the holding body 12B. The holding body 12B has a pair of main body portions 13A and 13B. The main body portion 13A corresponds to a part of the main body portion 13 of the first embodiment on one side in the Z-axis direction. The main body portion 13B corresponds to a part of the main body portion 13 of the first embodiment on the other side in the Z-axis direction.

Specifically, each of the main body portions 13A and 13B has an inner side surface 13a and an outer side surface 13b. The thickness of each of the main body portions 13A and 13B is about half the thickness of the main body portion 13 of the first embodiment. A pair of locking portions 14 are provided on one main surface of the main body portion 13A. A pair of locking portions 14 are provided on the other main surface of the main body portion 13B. The laser medium 11 is sandwiched between the main body portion 13A and the main body portion 13B in the Z-axis direction. Each of the main body portions 13A and 13B includes a plurality of deformation allowing portions 131. Each deformation allowing portion 131 is a slit 13c. In a case where the laser medium 11 is sandwiched between the main body portion 13A and the main body portion 13B, the main body portions 13A and 13B have the same configuration as the main body portion 13 of the first embodiment. In the second embodiment, the first elastic member 15 is not disposed in each slit 13c.

The laser medium unit 10B has the attachment member 16. The attachment member 16 surrounds the holding body 12B when viewed from the Z-axis direction. Specifically, the attachment member 16 has a first attachment member 161 and a second attachment member 162. The first attachment member 161 has, for example, a rectangular frame shape. In the first attachment member 161, a first stepped portion 16c and a second stepped portion 16d are formed between an inner edge 16a and an outer edge 16b. The first stepped portion 16c has, for example, a rectangular shape when viewed from the Z-axis direction. The second stepped portion 16d is positioned outside the first stepped portion 16c when viewed from the Z-axis direction. The second stepped portion 16d extends in the Y-axis direction when viewed from the Z-axis direction and reaches the outer edge 16b of the first attachment member 161.

The second attachment member 162 has, for example, a rectangular frame shape. An inner edge 16e of the second attachment member 162 substantially coincides with the inner edge 16a of the first attachment member 161 when viewed from the Z-axis direction. An outer edge 16f of the second attachment member 162 substantially coincides with the second stepped portion 16d of the first attachment member 161 when viewed from the Z-axis direction. The second attachment member 162 is disposed on the second stepped portion 16d of the first attachment member 161.

The outer side surfaces 13b of the pair of main body portions 13A and 13B are positioned outside the inner edge 16a of the first attachment member 161 and the inner edge 16e of the second attachment member 162 when viewed from the Z-axis direction and are substantially coincides with the first stepped portion 16c. The laser medium 11 and the holding body 12B are sandwiched between the first attachment member 161 and the second attachment member 162 in a state where they are disposed on the first stepped portion 16c. In this way, the holding body 12B is held by the attachment member 16 all at once.

As described above, the laser medium unit 10B has the attachment member 16. The attachment member 16 surrounds the holding body 12B when viewed from the Z-axis direction. As a result, even if the holding body 12 is divided by the plurality of slits 13c, it is possible to appropriately bring the holding body 12 into contact with the laser medium 11.

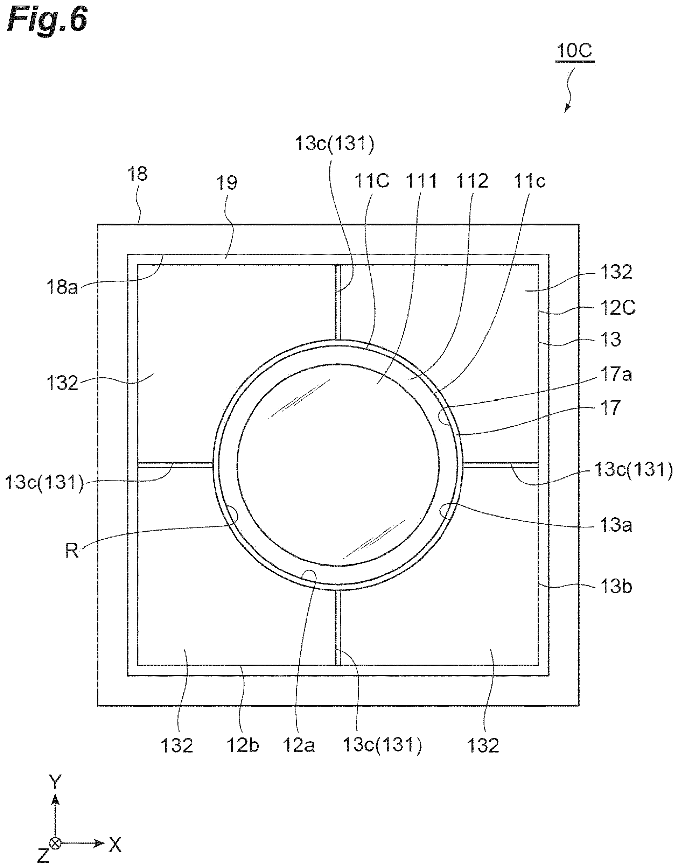

[Third embodiment] As shown in FIG. 6, a laser medium unit 10C of a third embodiment is mainly different from the laser medium unit 10A of the first embodiment in that it includes a laser medium 11C instead of the laser medium 11, a holding body 12C instead of the holding body 12, does not includes the first elastic member 15, further includes an attachment member 18, and further includes a second elastic member 19.

The laser medium unit 10C includes the laser medium 11C. The laser medium 11C has a light amplification region 111 and a light absorption region 112. The light amplification region 111 is, for example, YAG doped with Yb as an active element. The light amplification region 111 has, for example, a disk shape. The light absorption region 112 surrounds the light amplification region 111 when viewed from the Z-axis direction. The light absorption region 112 is formed integrally with the light amplification region 111. The light absorption region 112 curbs the occurrence of parasitic oscillation by absorbing some of the emitted light generated in the light amplification region 111. The outer side surface of the light absorption region 112 constitutes a side surface 11c of the laser medium 11C. The material of the light absorption region 112 is, for example, Cr:YAG ceramics, Sm:YAG, a black ink, a black resin, or the like.

The laser medium unit 10C has the holding body 12C. The holding body 12C has a main body portion 13 and a stress relieving portion 17. The stress relieving portion 17 is provided on an inner side surface 13a of the main body portion 13. That is, the stress relieving portion 17 is provided between the laser medium 11C and the main body portion 13. The stress relieving portion 17 has a ring shape. The stress relieving portion 17 has a predetermined width in the Z-axis direction. The width of the stress relieving portion 17 in the Z-axis direction is, for example, several millimeters to several tens of millimeters. The width of the stress relieving portion 17 in the Z-axis direction is approximately the same as the thickness of the laser medium 11C. The stress relieving portion 17 extends along the side surface 11c of the laser medium 11C when viewed from the Z-axis direction. The stress relieving portion 17 has a continuously connected configuration when viewed from the Z-axis direction. For example, a notch or the like may be locally formed in the stress relieving portion 17. For example, the notch may be formed at a position corresponding to a slit 13c of the main body portion 13 and may have substantially the same width as the slit 13c.

The laser medium 11C and the holding body 12C are in contact with each other. Specifically, the side surface 11c of the laser medium 11C and an inner side surface 17a of the stress relieving portion 17 are in contact with each other. In the third embodiment, the inner side surface 17a of the stress relieving portion 17 constitutes an inner side surface 12a of the holding body 12. In the third embodiment, the inner side surface 17a of the stress relieving portion 17 corresponds to the contact region R. The elastic modulus of the stress relieving portion 17 is smaller than the elastic modulus of the main body portion 13. The thermal conductivity of the stress relieving portion 17 is larger than the thermal conductivity of the laser medium 11C. The absolute value of a difference between the thermal conductivity of the stress relieving portion 17 and the thermal conductivity of the main body portion 13 is smaller than the absolute value of a difference between the thermal conductivity of the stress relieving portion 17 and the thermal conductivity of the laser medium 11C. That is, the thermal conductivity of the stress relieving portion 17 is closer to that of the main body portion 13 than that of the laser medium 11C. The material of the stress relieving portion 17 is, for example, indium or the like.

The laser medium unit 10C has the attachment member 18. The attachment member 18 surrounds the holding body 12C when viewed from the Z-axis direction. The attachment member 18 has, for example, a rectangular frame shape when viewed from the Z-axis direction. An inner side surface 18a of the attachment member 18 is located outside an outer side surface 13b of the main body portion 13 when viewed from the Z-axis direction. The thermal expansion coefficient of the attachment member 18 is smaller than the thermal expansion coefficient of the main body portion 13. The material of the attachment member 18 is, for example, stainless steel or the like.

The laser medium unit 10C has the second elastic member 19. The second elastic member 19 is disposed between the main body portion 13 and the attachment member 18. The second elastic member 19 extends along the outer side surface 13b of the main body portion 13 when viewed from the Z-axis direction. Similar to the first elastic member 15, the second elastic member 19 is formed of, for example, a plurality of overlapping wire-like elastic bodies. The material of the second elastic member 19 is, for example, copper or the like. The second elastic member 19 is, for example, a copper mesh. The second elastic member 19 is fixed to the outer side surface 13b of the main body portion 13 and the inner side surface 18a of the attachment member 18 by, for example, welding or brazing.

A plurality of main body members 132 of the main body portion 13 are held by the attachment member 18 and the second elastic member 19 all at once. The inner side surface 17a of the stress relieving portion 17 is in contact with the side surface 11c of the laser medium 11C due to the elastic force of the second elastic member 19. Specifically, the second elastic member 19 is compressed. The plurality of main body members 132 are pressed against the laser medium 11C due to the elastic force of the second elastic member 19. The inner side surface 17a of the stress relieving portion 17 is in contact with the side surface 11c of the laser medium 11C by being pressed by the plurality of main body members 132. In FIG. 6, illustration of a locking portion 14 is omitted.

As described above, in the laser medium unit 10C, the holding body 12C has the main body portion 13 and the stress relieving portion 17. The main body portion 13 includes a deformation allowing portion 131. The stress relieving portion 17 is provided between the laser medium 11C and the main body portion 13. As a result, it is possible to more reliably relieve a stress generated in the laser medium 11C due to the shrinkage of the holding body 12C, and it is possible to more reliably curb deterioration of the characteristics of the laser medium 11C due to stress birefringence. In addition, since the elastic modulus of the stress relieving portion 17 is smaller than the elastic modulus of the main body portion 13, it is possible to improve the adhesion between the laser medium 11C and the holding body 12C. As a result, it is possible to further efficiently release the heat generated in the laser medium 11C to the holding body 12C.

In the laser medium unit 10C, the laser medium 11C has the light amplification region 111 and the light absorption region 112 that surrounds the light amplification region 111 when viewed from the Z-axis direction. As a result, some of the emitted light generated in the light amplification region 111 is absorbed by the light absorption region 112, and thus the occurrence of the parasitic oscillation is curbed. Moreover, in the light absorption region 112, heat is generated by absorption of some of the emitted light, and thus the configuration of the holding body 12C described above is particularly effective. Further, in a case where the laser medium 11C has a plate shape, there is a tendency that cooling from the end surface of the laser medium 11C (end surface cooling), which is the main surface thereof, is the mainstream (common) and cooling from the side surface 11c of the laser medium 11C (side surface cooling) does not attract attention. Furthermore, in a case where the laser medium 11C has the light absorption region 112 that curbs the parasitic oscillation, a lot of heat is particularly generated on the side surface 11c of the laser medium 11C. Therefore, according to the configuration of the holding body 12C described above, it is possible to perform the end surface cooling by a coolant such as a cooling gas and to perform the side surface cooling by the holding body 12C. As a result, it is possible to efficiently release the heat generated in the laser medium 11C, and it is possible to efficiently curb deterioration of the laser characteristics of the laser medium 11C.

The laser medium unit 10C includes the second elastic member 19 disposed between the holding body 12C and the attachment member 18. As a result, even if the holding body 12C is divided by the plurality of slits 13c, it is possible to appropriately bring the holding body 12C into contact with the laser medium 11C.

In the laser medium unit 10C, the thermal expansion coefficient of the attachment member 18 is smaller than the thermal expansion coefficient of the main body portion 13. As a result, when the laser medium unit 10C is cooled, the shrinkage amount of the attachment member 18 becomes smaller than the shrinkage amount of the holding body 12C. However, using the second elastic member 19 disposed between the holding body 12C and the attachment member 18, it is possible to adjust the difference between the shrinkage amount of the attachment member 18 and the shrinkage amount of the holding body 12C, and it is possible to curb the influence of the shrinkage of the attachment member 18 on the laser medium 11C.

[Modification Examples] Although the embodiments of the present disclosure have been described above, the present disclosure is not limited to the above-described embodiments.

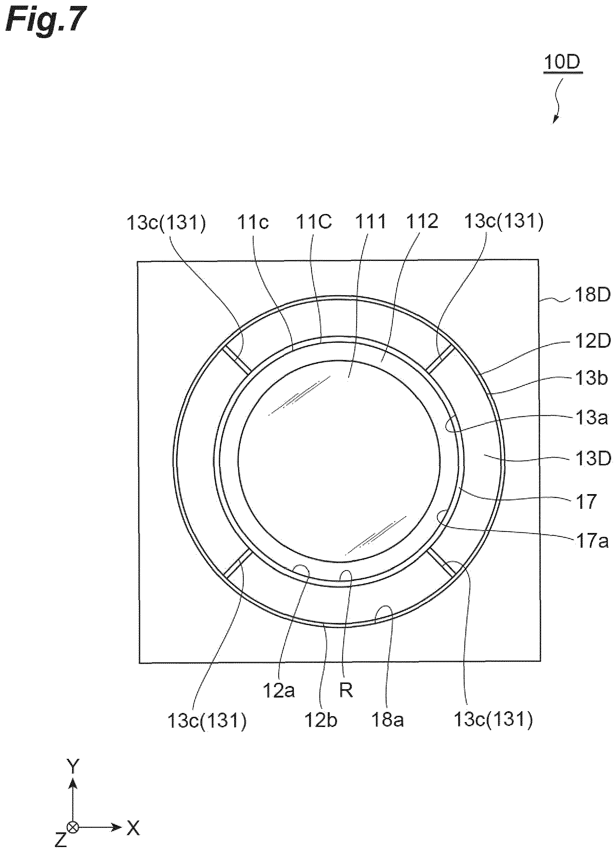

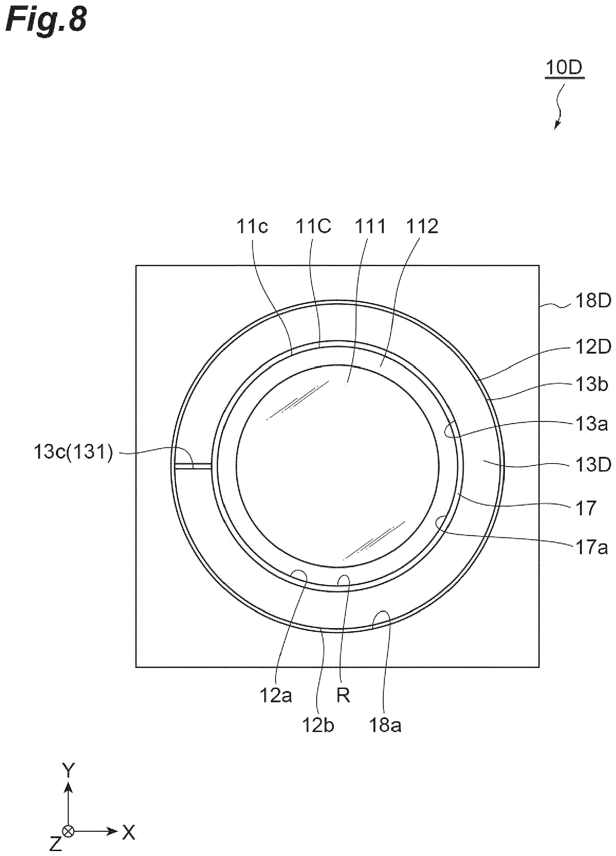

In the third embodiment, an example in which the outer side surface 13b of the main body portion 13 has a rectangular shape when viewed from the Z-axis direction has been shown, but as shown in FIG. 7, a main body portion 13D may have, for example, an annular shape when viewed from the Z-axis direction. In this case, an inner side surface 18a of an attachment member 18D has a circular shape when viewed from the Z-axis direction. In addition, the second elastic member 19 may not be disposed between a holding body 12D and the attachment member 18D. In this case, the thermal expansion coefficient of the attachment member 18D is larger than the thermal expansion coefficient of the main body portion 13D. As a result, in a case where the attachment member 18D is cooled, it is possible to hold the holding body 12D due to the shrinkage of the attachment member 18D, and it is possible to appropriately bring the holding body 12D into contact with a laser medium 11C. Further, as shown in FIG. 8, a main body portion 13E may include one slit 13c (a deformation allowing portion 131).

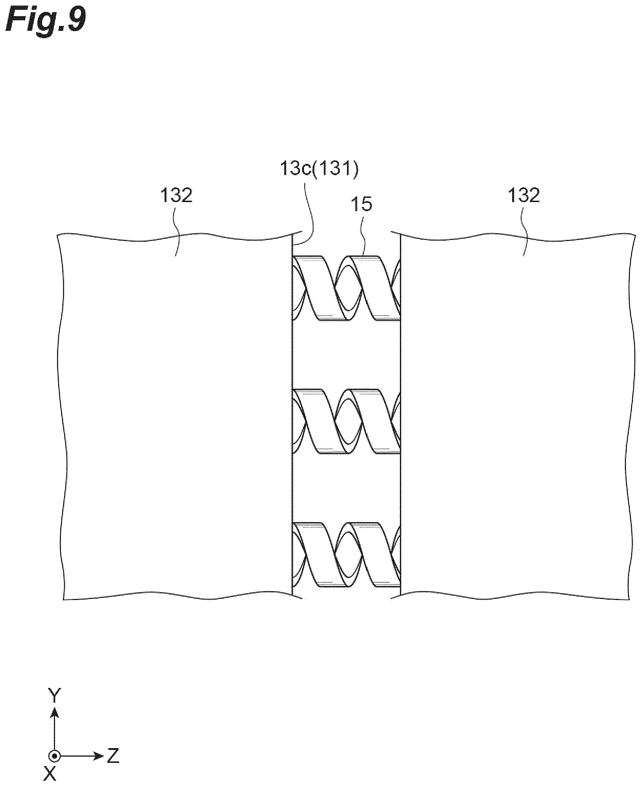

In the first embodiment, an example in which the first elastic member 15 is formed of a plurality of overlapping wire-like elastic bodies has been shown, but as shown in FIG. 9, the first elastic member 15 may be, for example, a spring or the like. Also in the third embodiment, the second elastic member 19 may be, for example, a spring or the like. Each of the first elastic member 15 and the second elastic member 19 may be made of, for example, an elastic resin such as an elastic adhesive.

In each embodiment, an example in which the laser medium 11 or 11C has a plate shape has been shown, but the laser medium 11 or 11C may have a rod shape, for example. In addition, an example in which the laser medium 11 or 11C has a disk shape has been shown, but the laser medium 11 or 11C may have a rectangular plate shape, for example.

In each embodiment, an example in which the slit 13c reaches the inner side surface 13a and the outer side surface 13b of the main body portion 13, 13A, or 13B has been shown, but the slit 13c may not reach the inner side surface 13a and the outer side surface 13b of the main body portion 13, 13A, or 13B. The slit 13c may reach either the inner side surface 13a or the outer side surface 13b of the main body portion 13, 13A, or 13B, or may not reach either the inner side surface 13a or the outer side surface 13b thereof. That is, the slit 13c may reach at least one of the inner side surface 13a and the outer side surface 13b of the main body portion 13, 13A, or 13B.

In each embodiment, an example in which each deformation allowing portion 131 is the slit 13c has been shown, but the deformation allowing portion 131 may not be the slit 13c. The deformation allowing portion 131 may be, for example, a first region of the holding body 12, 12B, or 12C. The elastic modulus of the first region may be smaller than the modulus of elasticity of a second region of the holding body 12, 12B, or 12C. In addition, the deformation allowing portion 131 may be, for example, a first region of the holding body 12, 12B, or 12C. The thickness of the first region in the Z-axis direction may be smaller than the thickness of a second region of the holding body 12, 12B, or 12C in the Z-axis direction. That is, the deformation allowing portion 131 may not pass through the holding body 12,12B, or 12C in the Z-axis direction. The deformation allowing portion 131 may be of any type as long as it allows deformation of the holding body 12, 12B, or 12C.

Each of the laser medium unit 10A of the first embodiment and the laser medium unit 10B of the second embodiment may be also provided with the holding body 12C having the stress relieving portion 17, similar to the laser medium unit 10C of the third embodiment.

Each of the laser medium unit 10A of the first embodiment and the laser medium unit 10B of the second embodiment may be also provided with the laser medium 11C having the light amplification region 111 and the light absorption region 112, similar to the laser medium unit 10C of the third embodiment.

In the third embodiment, an example in which the light absorption region 112 is formed integrally with the light amplification region 111 has been shown, but the light absorption region 112 may be formed separately from the light amplification region 111. The light absorption region 112 may be provided on a side surface of the light amplification region 111 as a separate member.

In the third embodiment, an example in which the thermal expansion coefficient of the attachment member 18 is lower than the thermal expansion coefficient of the main body portion 13 has been shown, but the thermal expansion coefficient of the attachment member 18 may be larger than the thermal expansion coefficient of the main body portion 13. In this case, when the laser medium unit 10C is cooled, the shrinkage amount of the attachment member 18 becomes larger than the shrinkage amount of the holding body 12C. However, using the second elastic member 19 disposed between the holding body 12C and the attachment member 18, it is possible to adjust the difference between the shrinkage amount of the attachment member 18 and the shrinkage amount of the holding body 12C, and it is possible to curb the influence of the shrinkage of the attachment member 18 on the laser medium 11C.

### Reference Signs List

1 Laser device
2 Chamber
3 Laser light source
4 Excitation light source
10A, 10B, 10C Laser medium unit
11, 11C Laser medium
11a, 11b End surface
11c Side surface
12, 12B, 12C, 12D Holding body
13, 13A, 13B, 13D Main body portion
13c Slit
15 First elastic member
16, 18, 18D Attachment member
17 Stress relieving portion
19 Second elastic member
41 First excitation light source
42 Second excitation light source
111 Light amplification region
112 Light absorption region
131 Deformation allowing portion
C Coolant

## Claims

1. A laser medium unit comprising:
a laser medium having a pair of end surfaces; and
a holding body configured to surround the laser medium when viewed from a direction intersecting with the pair of end surfaces and to hold the laser medium,
wherein the holding body includes a deformation allowing portion that extends from the inside to the outside of the holding body when viewed from the direction intersecting with the pair of end surfaces,
wherein the laser medium and the holding body are in contact with each other, and
wherein a contact region of the holding body with the laser medium has a width in the direction intersecting with the pair of end surfaces and extends along an outer edge of the laser medium when viewed from the direction intersecting with the pair of end surfaces.

2. The laser medium unit according to claim 1, wherein the laser medium has a plate shape with each of the pair of end surfaces as a main surface.

3. The laser medium unit according to claim 1 or 2, wherein the holding body has a main body portion including the deformation allowing portion and a stress relieving portion provided between the laser medium and the main body portion.

4. The laser medium unit according to any one of claims 1 to 3, wherein the laser medium has a light amplification region and a light absorption region that surrounds the light amplification region when viewed from the direction intersecting with the pair of end surfaces.

5. The laser medium unit according to any one of claims 1 to 4, wherein the deformation allowing portion includes a slit that extends from the inside to the outside of the holding body when viewed from the direction intersecting with the pair of end surfaces.

6. The laser medium unit according to claim 5,
wherein the slit is each of a plurality of slits, and
wherein the plurality of slits are disposed at equal angular intervals when viewed from the direction intersecting with the pair of end surfaces.

7. The laser medium unit according to claim 5 or 6, further comprising a first elastic member,
wherein the slit is each of a plurality of slits, and
wherein the first elastic member is disposed in each of the plurality of slits.

8. The laser medium unit according to any one of claims 5 to 7, further comprising an attachment member,
wherein the slit is each of a plurality of slits, and
wherein the attachment member surrounds the holding body when viewed from the direction intersecting with the pair of end surfaces.

9. The laser medium unit according to claim 8, further comprising a second elastic member disposed between the holding body and the attachment member.

10. The laser medium unit according to claim 9, wherein a thermal expansion coefficient of the attachment member is smaller than a thermal expansion coefficient of the holding body.

11. The laser medium unit according to claim 9, wherein a thermal expansion coefficient of the attachment member is larger than a thermal expansion coefficient of the holding body.

12. A laser device comprising the laser medium unit according to any one of claims 1 to 11.

13. The laser device according to claim 12, further comprising a chamber configured to accommodate the laser medium unit and to allow a coolant to flow therethrough.

14. The laser device according to claim 13,
wherein the laser medium unit is each of a plurality of laser medium units, and
wherein each of the plurality of laser medium units is disposed with a gap through which the coolant flows.

15. The laser device according to any one of claims 12 to 14, further comprising:
a laser light source configured to emit laser light to be amplified by the laser medium unit; and
an excitation light source configured to emit excitation light that excites the laser medium.

16. The laser device according to claim 15,
wherein the excitation light source is each of a first excitation light source and a second excitation light source,
wherein the first excitation light source is disposed on one side in the direction intersecting with the pair of end surfaces with respect to the laser medium unit, and
wherein the second excitation light source is disposed on the other side in the direction intersecting with the pair of end surfaces with respect to the laser medium unit.
